(19) Europäisches Patentamt
European Patent Office
Office européen des brevets

(11) Veröffentlichungsnummer : **0 023 035**
**B1**

(12) # EUROPÄISCHE PATENTSCHRIFT

(45) Veröffentlichungstag der Patentschrift : **15.12.82**

(51) Int. Cl.³ : **C 08 F 10/00**, C 08 F 4/64

(21) Anmeldenummer : **80104192.2**

(22) Anmeldetag : **17.07.80**

(54) **Verfahren zur Polymerisation von mindestens einem alpha-Olefin.**

(30) Priorität : **19.07.79 DE 2929325**

(43) Veröffentlichungstag der Anmeldung : **28.01.81 (Patentblatt 81/04)**

(45) Bekanntmachung des Hinweises auf die Patenterteilung : **15.12.82 Patentblatt 82/50**

(84) Benannte Vertragsstaaten : **BE DE FR GB IT**

(56) Entgegenhaltungen :
**DE A 2 027 302**
**DE A 2 724 974**

(73) Patentinhaber : **WACKER-CHEMIE GMBH**
**Prinzregentenstrasse 22**
**D-8000 München 22 (DE)**

(72) Erfinder : **Kurz, Dieter, Dr. Dipl.-Chem.**
**Langdörfferstrasse 12a**
**D-8263 Burghausen (DE)**

**EP 0 023 035 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Verfahren zur Polymerisation von mindestens einem alpha-Olefin

Zu den bereits bekannten Katalysatoren für die Polymerisation von mindestens einem alpha-Olefin, gehören auch solche, die aus einer festen Metallverbindung der IV. Nebengruppe des Periodensystems nach Mendeleeff, wie Titantrichlorid, Magnesium bzw. einer Organomagnesiumverbindung und mitunter auch mindestens einer Halogenverbindung von Elementen der III., IV., oder V. Hauptgruppe des Periodensystems nach Mendeleeff, bereitet werden. Hierzu wird verwiesen beispielsweise auf die Deutschen Offenlegungsschriften 2 219 711, 2 346 714 und 2 724 974 sowie auf das Referat J53 146-290 in « Japanese Patents Gazette ». Gegenüber vorbekannten Katalysatoren dieser Art sind die erfindungsgemäß verwendeten Katalysatoren in überraschendem Ausmaß aktiver und ergeben Polymere mit besseren physikalischen Eigenschaften, ohne daß eine Nachbehandlung der Polymeren zur Entfernung bzw. zum Unschädlichmachen von Metallverbindung erforderlich ist.

Gegenstand der Erfindung ist ein Verfahren zur Polymerisation von mindestens einem alpha-Olefin in Gegenwart von Katalysator, der aus einer festen Verbindung eines Metalls der IV. Nebengruppe des Periodensystems nach Mendeleeff, wobei dieses Metall zumindest zu 50 Gewichtsprozent in der III. Wertigkeitsstufe vorliegt, einer Organomagnesiumverbindung und mindestens einer Halogenverbindung von Elementen der III., IV. oder V. Hauptgruppe des Periodensystems nach Mendeleeff bereitet wurde, dadurch gekennzeichnet, daß die Zugabe von Halogenverbindung von Elementen der III., IV. oder V. Hauptgruppe des Periodensystems zur festen Verbindung eines zumindest zu 50 Gewichtsprozent in der III. Wertigkeitsstuffe vorliegenden Metalls der IV. Nebengruppe des Periodensystems vor Zugabe von Organomagnesiumverbindung erfolgte.

Bei der festen Verbindung eines Metalls der IV. Nebengruppe des Periodensystems nach Mendeleeff kann es sich um beliebige Verbindungen von Titan, Zirkonium, Hafnium und/oder Thorium handeln, solange die Metallanteile dieser Verbindungen zumindest zu 50 Gewichtsprozent des jeweiligen Metallanteils in der III. Wertigkeitsstufe vorliegen und solange diese Verbindungen zumindest bei der Temperatur, bei der in Gegenwart von erfindungsgemäß verwendeten Katalysator die Polymerisation von mindestens einem alpha-Olefin durchgeführt wird, fest sind. Bevorzugt sind Verbindungen der allgemeinen Formel

$$X_aTi(OR)_{3-a}$$

wobei X gleiche oder verschiedene Halogenatome, vorzugsweise Chlor, R gleiche oder verschiedene, geradkettige oder verzweigte Alkyl- oder Arylreste mit 1 bis 8 Kohlenstoffatomen und a2 oder 3 ist, und Gemische aus solchen Verbindungen, so daß a auch durchschnittliche Werte zwischen 2 und 3 haben kann. Solche dreiwertigen Titanverbindungen können beispielsweise durch Reduktion von einer Verbindung der allgemeinen Formel

$$X_bTi(OR)_{4-b}$$

worin X und R jeweils die vorstehend dafür angegebene Bedeutung haben, und b2, 3 oder 4 ist, vorzugsweise von Titantetrachlorid, oder von Gemischen aus derartigen Verbindungen hergestellt werden.

Die Reduktion von Verbindung der allgemeinen Formel

$$X_bTi(OR)_{4-b} \text{ zu } X_aTi(OR)_{3-a}$$

kann mit Reduktionsmitteln, wie Wasserstoff oder metallischem Aluminium oder Organoaluminiumverbindungen, erfolgen. Bei den für eine derartige Reduktion eingesetzten Organoaluminiumverbindungen kann es sich um solche mit geradkettigen oder verzweigten Alkyl- oder Arylgruppen mit 1 bis 20 Kohlenstoffatomen und gegebenenfalls Wasserstoffatomen, Halogenatomen, insbesondere Chloratomen, Alkoxy-, Aryloxy- oder Siloxygruppen mit 1 bis 20 Kohlenstoffatomen handeln.

Besonders bevorzugt als Reduktionsmittel für die Herstellung von

$$X_aTi(OR)_{3-a} \text{ aus } X_bTi(OR)_{4-b}$$

sind Alkylaluminiumverbindungen der vorstehend definierten Art. Einzelne Beispiele für solche Alkylaluminiumverbindungen sind Triäthylaluminium, Tri-n-butylaluminium, Tri-isobutyl-aluminium, Tri-n-octylaluminium, sog. « Isoprenylaluminium » (Schering AG), Diäthylaluminiumhydrid, Diisobutylaluminiumhydrid, Äthylaluminiumdichlorid, Diäthylaluminiumchlorid, Äthylaluminiumsesquichlorid, Diäthylaluminiumäthoxyd und Äthyldimethylsiloxydiäthylaluminium.

Selbstverständlich können auch Gemische verschiedener Organoaluminiumverbindungen eingesetzt werden.

Vorzugsweise erfolgt die Herstellung von

$X_aTi(OR)_{3-a}$ aus $X_bTi(OR)_{4-b}$

in einem Kohlenwasserstoff oder in einem Gemisch aus Kohlenwasserstoffen als Medium, in der die Reduktion durchgeführt wird. Zumindest bei Verwendung von Wasserstoff oder metallischem Aluminium als Reduktionsmittel kann die feste Verbindung eines Metalls der IV. Nebengruppe des Periodensystems nach Mendeleeff, wobei dieses Metall zumindest zu 50 Gewichtsprozent in der III. Wertigkeitsstufe vorliegt, während oder nach der Reduktion gemahlen werden, um eine möglichst hohe Aktivität des Katalysators zu erzielen.

Die Herstellung von III.-wertigen Verbindungen des Titans aus den oben angegebenen Stoffen ist allgemein bekannt und braucht daher nicht noch eingehender hier beschrieben zu werden.

Vorzugsweise wird feste Verbindung eines Metalls der IV. Nebengruppe des Periodensystems nach Mendeleeff, wobei dieses Metall zumindest zu 50 Gewichtsprozent in der III. Wertigkeitsstufe vorliegt, vor Zugabe von Halogenverbindung von Element der III., IV. oder V. Gruppe des Periodensystems mit Kohlenwasserstoff gewaschen, von zumindest einem Teil von Fremdstoffen, wie überschüssiges Reduktionsmittel und bei der Reduktion entstandene Nebenprodukte, zu entfernen. Für dieses Waschen kann der Kohlenwasserstoff, wie Isooktan, bzw. das Gemisch aus Kohlenwasserstoffen der gleichen Art verwendet werden wie das Medium, das bei der Reduktion verwendet wurde.

Es kann eine feste Verbindung eines Metalls der IV. Nebengruppe des Periodensystems nach Mendeleeff, wobei dieses Metall zumindest zu 50 Gewichtsprozent in der III. Wertigkeitsstufe vorliegt, verwendet werden. Es können aber auch Gemische aus mindestens zwei solcher festen Verbindungen verwendet werden.

Als Halogenverbindungen von Element der III., IV. oder V. Hauptgruppe des Periodensystems nach Mendeleeff, die bei dem erfindungsgemäßen Verfahren eingesetzt werden, sind Chlorverbindungen, insbesondere solche mit mindestens 2 Chloratomenen je Molekül bevorzugt.

Die Elemente der III., IV. oder V. Hauptgruppe des Periodensystems nach Mendeleeff, von denen sich die Halogenverbindungen ableiten können, die erfindungsgemäß vor Zugabe von Organomagnesium verbindung mit fester Verbindung eines zumindest zu 50 Gewichtsprozent in der III. Wertigkeitsstufe vorliegenden Metalls der IV. Nebengruppe des Periodensystems vermischt werden, können B, Al, Ga, In Tl, C, Si, Ge, Sn, Pb, N, P, As, Sb, Bi sein, also Ordnungszahlen zwischen 5 und 83 haben.

Als Elemente der III., IV. oder V. Hauptgruppe des Periodensystems nach Mendeleeff, von denen sich die Halogenverbindungen ableiten, die erfindungsgemäß vor Zugabe von Organomagnesiumverbindung mit fester Verbindung eines zumindest zu 50 Gewichtsprozent in der III. Wertigkeitsstufe vorliegenden Metalls der IV. Nebengruppe des Periodensystems vermischt werden, sind Bor, Aluminium, Silicium, Zinn, Phosphor und insbesondere Kohlenstoff bevorzugt.

Als Halogenverbindungen des Kohlenstoffes sind solche mit 1 bis 6 Kohlenstoffatomen je Molekül, insbesondere Chlorkohlenstoffverbindungen und Chlorkohlenwasserstoffe mit 1 bis 6 Kohlenstoffatomen mit mindestens einem Kohlenstoffatom, das durch mindestens 2 Chloratome substituiert ist, bevorzugt. Beispiele für bevorzugte Chlorkohlenstoffverbindungen bzw. Chlorkohlenwasserstoffe sind Dichlormethan, Chloroform, Tetrachlorkohlenstoff, 1,1-Dichloräthan, 1,1,1-Trichloräthan, 1,1,2-Trichloräthan, 1,1,1,2-Tetrachloräthan, 1,1,2,2-Tetrachloräthan, Pentachloräthan, Trichloräthylen und Perchloräthylen. Besonders bevorzugt ist Chloroform.

Es kann eine Art von Halogenverbindung von Element der III., IV. oder V. Hauptgruppe des Periodensystems nach Mendeleeff verwendet werden. Es können aber auch Gemische aus mindestens zwei solchen Halogenverbindungen verwendet werden.

Halogenverbindung von Element der III., IV. oder V. Hauptgruppe des Periodensystems wird vorzugsweise in Mengen von 0,5 bis 5 Mol, insbesondere 2 bis 2,5 Mol, je Mol Organomagnesiumverbindung eingesetzt.

Als Organomagnesiumverbindung wird solche bevorzugt, die in aliphatischem oder aromatischem Kohlenwasserstoff löslich ist. Es handelt sich dabei um Verbindungen der allgemeinen Formel

$$R_2^1Mg \text{ oder } R^1MgOR^1,$$

wobei $R^1$ gleiche oder verschiedene, geradkettige oder verzweigte, Alkyl- oder Arylreste mit 2 bis 20 Kohlenstoffatomen bedeutet. Verbindungen der allgemeinen Formel $R_2^1Mg$ sind bevorzugt. Einzelne Beispiele für bevorzugte, in aliphatischem oder aromatischem Kohlenwasserstoff lösliche Organomagnesiumverbindungen sind n-Butyläthylmagnesium, Di-n-butylmagnesium, n-Butyl- iso -butyl-magnesium, N-Butyl-sec.-butylmagnesium, Di-n-hexylmagnesium, Di-n-pentylmagnesium, Di-n-octylmagnesium und Diphenylmagnesium.

Es kann eine Organomagnesiumverbindung verwendet werden. Es können aber auch Gemische von verschiedenen Organomagnesiumverbindungen verwendet werden.

Feste Verbindung eines Metalls der IV. Nebengruppe des Periodensystems nach Mendeleeff, wobei dieses Metall zumindest zu 50 Gewichtsprozent in der III. Wertigkeitsstufe vorliegt, insbesondere des Titans, und Organomagnesiumverbindung wird vorzugsweise in solchen Mengen eingesetzt, daß 0,20 bis 5 Grammatom Metall der IV. Nebengruppe, insbesondere 0,5 bis 4 Grammatom Metall der IV. Nebengruppe je Grammatom Magnesium vorliegen.

Bei der Zugabe von Organomagnesiumverbindung zu dem Gemisch aus fester Verbindung eines Metalls der IV. Nebengruppe des Periodensystems nach Mendeleeff, wobei dieses Metall zumindest zu 50 Gewichtsprozent in der III. Wertigkeitsstufe vorliegt, und Halogenvorbindung von Element der III., IV. oder V. Hauptgruppe des Periodensystems nach Mendeleeff ist Organomagnesiumverbindung vorzugsweise in mindestens einem aliphatischen und/oder aromatischem Kohlenwasserstoff gelöst. Das Gemisch aus fester Verbindung eines Metalls der IV. Nebengruppe des Periodensystems nach Mendeleeff, wobei dieses Metall zumindest zu 50 Gewichtsprozent in der III. Wertigkeitsstufe vorliegt, und Halogenverbindung von Element der III., IV. oder V. Hauptgruppe des Periodensystems nach Mendeleeff befindet sich vor und bei dieser Zugabe vorzugsweise ebenfalls in mindestens einem aliphatischen und/oder aromatischen Kohlenwasserstoff. Die Gesamtmenge an aliphatischem und/oder aromatischem Kohlenwasserstoff beträgt vorzugsweise 200 bis 2 000 Gewichtsprozent, bezogen auf das Gesamtgewicht von fester Verbindung eines Metalls der IV. Nebengruppe des Periodensystems nach Mendeleeff, wobei dieses Metall zumindest zu 50 Gewichtsprozent in der III. Wertigkeitsstufe vorliegt, Halogenverbindung von Element der III., IV. oder V. Hauptgruppe des Periodensystems nach Mendeleeff und Organomagnesiumverbindung.

Die Zugabe von Organomagnesiumverbindung zu dem Gemisch aus fester Verbindung eines Metalls der IV. Nebengruppe des Periodensystems nach Mendeleeff, wobei dieses Metall zumindest zu 50 Gewichtsprozent in der III. Wertigkeitsstufe vorliegt, und Halogenverbindung von Element der III., IV. oder V. Hauptgruppe des Periodensystems nach Mendeleeff erfolgt vorzugsweise unter Rühren bei Temperaturen von −40 °C bis + 100 °C, insbesondere −5 °C bis + 50 °C, innerhalb von 0,25 Stunden bis mehreren Stunden.

Vorzugsweise wird der durch Zugabe von zunächst Halogenverbindung der III., IV. oder V. Hauptgruppe des Periodensystems nach Mendeleeff und dann von Organomagnesiumverbindung zu fester Verbindung eines zumindest zu 50 Gewichtsprozent in der III. Wertigkeitsstufe vorliegenden Metalls der IV. Nebengruppe des Periodensystems erhaltene Feststoff vor Einsatz als Katalysator bei der Polymerisation von mindestens einem alpha-Olefin mit Kohlenwasserstoff oder einem Gemisch aus Kohlenwasserstoffen gewaschen.

Der durch Zugabe von zunächst Halogenverbindung der III., IV. der V. Hauptgruppe des Periodensystems nach Mendeleeff und dann von Organomagnesiumverbindung zu fester Verbindung eines zumindest zu 50 Gewichtsprozent in der III. Wertigkeitsstufe vorliegenden Metalls der IV. Nebengruppe des Periodensystems erhaltene Feststoff wird bei der Polymerisation von mindestens einem alpha-Olefin vorzugsweise gemeinsam mit mindestens einem Cokatalysator, wie mindestens einer metallorganischen Verbindung eines Metalls der II. oder III. Hauptgruppe des Periodensystems oder in Mischung mit $TiCl_4$ auf $MgCl_2$ eingesetzt.

Als Cokatalysator sind Organoaluminiumverbindungen der gleichen Art, wie sie oben bereits als Reduktionsmittel gennant wurden, insbesondere jedoch Trialkylaluminiumverbindungen, wie Triisobutylaluminium und/oder « Isoprenylaluminium » bevorzugt.

Wird als Cokatalysator Organoaluminiumverbindung verwendet, wird Organoaluminiumverbindung vorzugsweise in Mengen von 2 bis 100, insbesondere 5 bis 50 Grammaton Aluminium je Grammatom Metall der IV. Nebengruppe eingesetzt.

Beispiele für nach dem erfindungsgemäßen Verfahren polymerisierbare alpha-Olefine sind Äthylen, Propylen, Buten-1, Penten-1, 3-Methylbuten-1, Hexen-1 und 3-Äthylbuten-1. Vorzugsweise wird jedoch erfindungsgemäß Äthylen gegebenenfalls im Gemisch mit bis zu 10 Molprozent, bezogen auf die Gesamtmolmenge zu polymerisierenden alpha-Olefins, alpha-Olefinen mit 3 bis 6 Kohlenstoffatomen polymerisiert.

Die Polymerisation der alpha-Olefine kann stetig oder absatzweise, einstufig oder mehrstufig, in der Gasphase oder in mindestens einem aliphatischen und/oder aromatischem Kohlenwasserstoff, bei Drücken von 3 bis 40 bar (abs.) und Temperaturen von 60° bis 100 °C durchgeführt werden.

Bei der erfindungsgemäßen Polymerisation von alpha-Olefinen kann Wasserstoff zur Regelung des Molekulargewichts der Polymeren aus alpha-Olefin mitverwendet werden.

Die Polymerisation in mehreren Stufen erfolgt diskontinuierlich dadurch, daß während der Polymerisation die Polymerisationsbedingungen, insbesondere die Zusammensetzung der Gasphase, stufenweise verändert wird.

Bei der kontinuierlichen Polymerisation in einem Reaktor kann z.B. der Partialdruck von Wasserstoff, wenn er mitverwendet wird, periodisch etwa in Art einer Rechteck- oder Sägezahnschwingung mit einer Frequenz in der Größenordnung der mittleren Verweilzeit geändert werden. Die kontinuierliche Polymerisation kann aber auch nacheinander in zwei oder mehr Reaktoren mit unterschiedlich eingestellten Polymerisationsbedingungen ablaufen gelassen werden. Vorzugsweise benützt man 2 Reaktoren mit unterschiedlichen Wasserstoffpartialdrücken und unterschiedlichen Polymerisationstemperaturen. Auf diese Weise ist es möglich, mittel- und hochmolekulare Polymere mit sehr guten Verarbeitungseigenschaften herzustellen.

Die erfindungsgemäß hergestellten Polymeren haben hohe Steifigkeit, hohe Schlagzähigkeit und gute Verarbeitbarkeit.

In den folgenden Beispielen beziehen sich alle Angaben von Prozentsätzen auf das Gewicht, soweit nichts anderes angegeben ist.

Beispiel 1

a) Zu einem Gemisch aus 90 mMol $TiCl_4$ und 140 ml Isooctan in einem graduierten, zylindrischem Reaktionsgefäß mit 300 ml Inhalt, das von einem Mantel, der Kühlen oder Erwärmen des Reaktionsgefäßes ermöglicht, umgeben ist, werden bei 0 °C unter Rühren innerhalb einer Stunde 180 mMol $Cl_3Al_2(C_2H_5)_3$, die in 105 ml Isooctan gelöst sind, unter Ausschluß von Sauerstoff und Wasser tropfenweise gegeben. Die so erhaltene Mischung wird innerhalb einer Stunde auf Raumtemperatur erwärmt und weitere 3 Stunden gerührt. Anschließend wird der feste Anteil des Inhalts des Reaktionsgefäßes 4 mal mit je 200 ml Isooctan gewaschen, auf 300 ml mit Isooctan aufgefüllt und 1 Stunde bei 95 °C gerührt. Nach dem Abkühlen auf Raumtemperatur wird der feste Anteil des Inhalts des Reaktionsgefäßes erneut 2 mal mit je 200 ml Isooctan gewaschen und mit Isooctan auf 150 ml aufgefüllt.

b) Danach werden zu der Titantrichlorid-Suspension zunächst 112 mMol Chloroform und dazu tropfenweise unter Rühren innerhalb einer Stunde bei Raumtemperatur 100 ml einer Lösung von 54 mMol n-Butyl-sec.-Butylmagnesium in n-Heptan gegeben. Die so erhaltene Suspension wird noch 1,5 Stunden bei Raumtemperatur gerührt. Schließlich wird der feste Anteil des Inhalts des Reaktionsgefäßes 5 mal mit je 200 ml Isooctan gewaschen.

Analyse des Feststoffes :

18,1 % Ti, 5,6 % Mg, 3,3 % Al, 64,3 % Cl, 7,8 % nicht bestimmter Rest.

$V_1$) Zum Vergleich werden zu der Titantrichlorid-Suspension, deren Herstellung oben unter a) beschrieben wurde, zunächst 100 ml der Lösung von 54 mMol n-Butyl-sec.-Butylmagnesium in n-Heptan und dazu tropfenweise unter Rühren innerhalb einer Stunde bei Raumtemperatur 112 mMol Chloroform gegeben. Die so erhaltene Suspension wird noch 1,5 Stunden bei Raumtemperatur gerührt. Schließlich wird der feste Anteil des Inhalts des Reaktionsgefäßes 5 mal mit je 200 ml Isooctan gewaschen.

Analyse des Feststoffs :

17,2 % Ti, 5,7 % Mg, 3,3 % Al, 65,3 % Cl, 8,5 % nicht bestimmter Rest.

$V_2$) Zum weiteren Vergleich werden zu einem Gemisch aus 112 mMol Chloroform und 135 ml Isooctan in dem graduierten, zylindrischen Reaktionsgefäß mit 300 ml Inhalt, das von einem Mantel, der Kühlen oder Erwärmen des Reaktionsgefäßes ermöglicht, umgeben ist, bei Raumtemperatur unter Rühren innerhalb einer Stunde 100 ml der Lösung von 54 mMol n-Butyl-sec.-Butylmagnesium in n-Heptan unter Ausschluß von Sauerstoff und Wasser tropfenweise gegeben. Die so erhaltene Mischung wird noch 1,5 Stunden bei Raumtemperatur gerührt. Dann werden zu der so erhaltenen, leicht braunen Suspension zunächst 90 mMol Titantetrachlorid und dann tropfenweise unter Rühren 180 mMol $Cl_3Al_2(C_2H_5)_3$ innerhalb einer Stunde bei Raumtemperatur gegeben. Die so erhaltene Mischung wird innerhalb einer Stunde auf Raumtemperatur erwärmt und weitere 3 Stunden gerührt. Anschließend wird der feste Anteil des Inhalts des Reaktionsgefäßes 6 mal mit je 200 ml Isooctan gewaschen.

alpha) Ein Teil des so gemäß $V_2$ erhaltenen Feststoffs (Analyse : 15 % Ti, 3,9 % Mg, 7,7 % Al, 64,2 % Cl, 9,2 % nicht bestimmter Rest) wird direkt bei der Polymerisation c) eingesetzt.

beta) Der Rest des Feststoffs, der gemäß $V_2$ erhalten wurde, wird 1 Stunde in Isooctan auf 95 °C erwärmt und nach dem Abkühlen auf Raumtemperatur 2 mal mit je 200 ml Isooctan gewaschen.

Analyse dieses Feststoffs :

21,6 % Ti, 4,8 % Mg, 2 % Al, 66,7 % Cl, 4,9 % nicht bestimmter Rest.

c) In einem 1 1-Glasautoklav wird in 700 ml Isooctan bei 85 °C, 350 Umdrehungen je Minute und 11 bar (abs.) Gesamtdruck Äthylen in Gegenwart von je 3 mg Titan in Form von Feststoff, dessen Herstellung oben beschrieben wurde, Trialkylaluminium, dessen Menge und Art in der folgenden Tabelle angegeben ist, und Wasserstoff polymerisiert.

TABELLE

| Feststoff gemäß | Trialkylaluminium ml | $H_2$ im Gäsraum % | Zeit Stunde | Polyäthylen g | $MFI_5$*) | Schütt-dichte g/l | kleiner als 100 Mikrometer % |
|---|---|---|---|---|---|---|---|
| b | 0,2 $Al(iso\text{-}C_4H_9)_3$ | 17 | 1 | 250 | 1,7 | 340 | 0,3 |
| | 0,2 $Al(iso\text{-}C_4H_9)_3$ | 30 | 1,5 | 220 | 8,2 | 330 | 0,6 |
| | 0,3 « Isoprenylaluminium » | 17 | 1 | 230 | 1,5 | 340 | 0,5 |
| $V_1$ | 0,2 $Al(iso\text{-}C_4H_9)_3$ | 17 | 1 | 106 | 1,5 | 300 | 0,2 |
| | 0,2 $Al(iso\text{-}C_4H_9)_3$ | 30 | 1,5 | 120 | 7,8 | 303 | 0,1 |

TABELLE (Fortsetzung)

| Feststoff gemäß | Trialkylaluminium ml | $H_2$ im Gäsraum % | Zeit Stunde | Polyäthylen g | $MFI_5$* | Schütt-dichte g/l | kleiner als 100 Mikrometer % |
|---|---|---|---|---|---|---|---|
| | 0,3 « Isoprenylaluminium » | 17 | 1 | 37 | 1,3 | 300 | 0,5 |
| $V_2$ | 0,2 $Al(iso\text{-}C_4H_9)_3$ | 17 | 1 | 137 | 0,35 | 264 | 15 |
| alpha | 0,2 $Al(iso\text{-}C_4H_9)_3$ | 30 | 1,5 | 132 | 1,8 | 275 | 25 |
| | 0,3 « Isoprenylaluminium » | 17 | 1 | 170 | 1,1 | 260 | 24 |
| $V_2$ | 0,2 $Al(iso\text{-}C_4H_9)_3$ | 17 | 1 | 168 | 0,53 | 204 | 4 |
| beta | 0,2 $Al(iso\text{-}C_4H_9)_3$ | 30 | 1,5 | 160 | 2,1 | 228 | 4 |
| | 0,3 « Isoprenylaluminium » | 17 | 1 | 149 | 0,44 | 232 | 9 |

* $MFI_5$ = Schmelzindex bestimmt gemäß DIN (Deutsche Industrie Norm) 53 735 bei 190 °C und 49,05 N Belastung.

Beispiel 2

In einem 5 1-Laborautoklaven wird in 3,5 l Isooctan bei 650 Umdrehungen je Minute Äthylen in Gegenwart von 20 mg Titan in Form des Feststoffes, dessen Herstellung in Beispiel 1 unter b) beschrieben wurde, und 2 ml Tri-isobutyl-aluminium in einer 1. Stufe 85 Minuten bei 7,5 bar (abs.) Wasserstoff und 3,5 bar (abs.) Äthylen und 90 °C und dann in einer 2. Stufe 25 Minuten bei 0,4 bar (abs.) Wasserstoff und 8,5 bar (abs.) Äthylen und 75 °C polymerisiert.

Es werden 1250 g eines grobkörnigen Polyäthylens erhalten. $MFI_5$ = 0,3

Der Quotient der bei 110 °C bestimmten Schmelzindices unter 211,9 N und 49,05 N Belastung beträgt 25.

**Ansprüche**

1. Verfahren zur Polymerisation von mindestens einem alpha-Olefin in Gegenwart von Katalysator, der aus einer festen Verbindung eines Metalls der IV. Nebengruppe des Periodensystems nach Mendeleeff, wobei dieses Metall zumindest zu 50 Gewichtsprozent in der III. Wertigkeitsstufe vorliegt, einer Organomagnesiumverbindung und mindestens einer Halogenverbindung von Element und mindestens einer Halogenverbindung von Element der III., IV. oder V. Hauptgruppe des Periodensystems nach Mendeleeff bereitet wurde, dadurch gekennzeichnet, daß die Zugabe von Halogenverbindung von Element der III., IV. oder V. Hauptgruppe des Periodensystems zur festen Verbindung eines zumindest zu 50 Gewichtsprozent in der III. Wertigkeitsstufe vorliegenden Metalls der IV. Nebengruppe des Periodensystems vor Zugabe von Organomagnesiumverbindung erfolgte.

2. Verfahren nach Anspruch 1, dadurch gekennzeichnet, daß feste Verbindung eines Metalls der IV. Nebengruppe des Periodensystems nach Mendeleeff, wobei dieses Metall zumindest zu 50 Gewichtsprozent in der III. Wertigkeitsstufe vorliegt, vor Zugabe von Halogenverbindung von Element der III., IV. oder V. Gruppe des Periodensystems mit Kohlenwasserstoff gewaschen wird.

3. Verfahren nach Anspruch 1 oder 2, dadurch gekennzeichnet, daß als Halogenverbindung von Element der III., IV. oder V. Hauptgruppe des Periodensystems Verbindungen von Kohlenstoff, Bor, Aluminium, Silicium, Zinn und/oder Phosphor mit mindestens 2 Chloratomen je Molekül verwendet werden.

4. Verfahren nach Anspruch 3, dadurch gekennzeichnet, daß als Halogenverbindung Chloroform eingesetzt wird.

5. Verfahren nach einem der Ansprüche 1 bis 4, dadurch gekennzeichnet, daß Halogenverbindung von Element der III., IV. oder V. Hauptgruppe des Periodensystems in Mengen von 2 bis 2,5 Mol je Mol Organomagnesiumverbindung eingesetzt wird.

6. Verfahren nach einem der Ansprüche 1 bis 5, dadurch gekennzeichnet, daß als Organomagnesiumverbindung solche verwendet wird, die in aliphatischem oder aromatischem Kohlenwasserstoff löslich ist.

7. Verfahren nach Anspruch 5, dadurch gekennzeichnet, daß feste Verbindung eines Metalls der IV. Nebengruppe des Periodensystems nach Mendeleeff, wobei dieses Metall zumindest zu 50 Gewichtsprozent in der III. Wertigkeitsstufe vorliegt, und Organomagnesiumverbindung in solchen Mengen eingesetzt werden, daß 0,20 bis 5 Grammatom Metall der IV. Nebengruppe je Grammatom Magnesium vorliegen.

8. Verfahren nach einem der Ansprüche 1 bis 7 dadurch gekennzeichnet, daß bei der Polymerisation zusätzlich mindestens ein Cokatalysator mitverwendet wird.

9. Verfahren nach Anspruch 8, dadurch gekennzeichnet, daß als Cokatalysator mindestens eine Trialkylaluminiumverbindung verwendet wird.

**Claims**

1. Process for the polymerisation of at least one alpha-olefin in the presence of a catalyst which has been prepared from a solid compound of a metal of sub-Group IV of Mendeleev's Periodic Table, at least 50 % by weight of the metal being in the third valency state, an organomagnesium compound, and at least one halogen compound of an element of main Group III, IV or V of Mendeleev's Periodic Table, characterised in that the addition of the halogen compound of an element of main Group III, IV or V of the Periodic Table to the solid compound of a metal of sub-Group IV of the Periodic Table, at least 50 % by weight of which was in the third valency state, was effected prior to the addition of the organomagnesium compound.

2. Process according to claim 1, characterised in that the solid compound of a metal of sub-Group IV of Mendeleev's Periodic Table, at least 50 % by weight of the metal being in the third valency state, was washed with a hydrocarbon prior to the addition of the halogen compound of an element of Group III, IV or V of the Periodic Table.

3. Process according to claim 1 or 2, characterised in that compounds of carbon, boron, aluminium, silicon, tin and/or phosphorus having at least 2 chlorine atoms per molecule are used as the halogen compound of an element of main Group III, IV or V of the Periodic Table.

4. Process according to claim 3, characterised in that chloroform is used as the halogen compound.

5. Process according to any one of claims 1 to 4, characterised in that the halogen compound of an element of main Group III, IV or V of the Periodic Table is used in an amount of from 2 to 2.5 moles per mole of the organomagnesium compound.

6. Process according to any one of claims 1 to 5, characterised in that the organomagnesium compound used is one which is soluble in an aliphatic or aromatic hydrocarbon.

7. Process according to claim 5, characterised in that the solid compound of a metal of sub-Group IV of Mendeleev's Periodic Table, at least 50 % by weight of the metal being in the third valency state, and the organomagnesium compound are used in such amounts that from 0.20 to 5 gram atoms of the metal of sub-Group IV are present per gram atom of magnesium.

8. Process according to any of claims 1 to 7, characterised in that at least one co-catalyst is additionally used concomitantly during polymerisation.

9. Process according to claim 8, characterised in that at least one trialkylaluminium compound is used as the co-catalyst.

**Revendications**

1. Procédé de polymérisation d'une ou de plusieurs alpha-oléfines en présence d'un catalyseur préparé à partir d'un composé solide d'un métal du sous-groupe IV de la classification périodique de Mendeleiev, métal qui est pour au moins 50 % en poids à l'état de valence 3, d'un organomagnésien et d'un ou de plusieurs dérivés halogénés d'éléments du groupe principal III, IV ou V de la classification périodique, procédé caractérisé en ce que l'on ajoute le dérivé halogéné de l'élément du groupe principal III, IV ou V au composé solide du métal du sous-groupe IV qui est pour au moins 50 % en poids à l'état de valence 3, avant d'ajouter l'organomagnésien.

2. Procédé selon la revendication 1 caractérisé en ce qu'on lave avec un hydrocarbure le composé solide du métal du sous-groupe IV qui est pour au moins 50 % en poids à l'état de valence 3, avant d'ajouter le dérivé halogéné de l'élément du groupe III, IV ou V de la classification périodique.

3. Procédé selon la revendication 1 ou 2 caractérisé en ce qu'on utilise comme dérivé halogéné d'un élément du groupe principal III, IV ou V un composé du carbone, du bore, de l'aluminium, du silicium, de l'étain et/ou du phosphore, ayant au moins 2 atomes de chlore par molécule.

4. Procédé selon la revendication 3 caractérisé en ce que l'on utilise le chloroforme comme dérivé halogéné.

5. Procédé selon l'une quelconque des revendications 1 à 4, caractérisé en ce que le dérivé halogéné de l'élément du groupe III, IV ou V est employé dans une proportion de 2 à 2,5 moles par mole du composé organomagnésien.

6. Procédé selon l'une quelconque des revendications 1 à 5, caractérisé en ce que l'on utilise comme composé organomagnésien un composé soluble dans des hydrocarbures aliphatiques ou aromatiques.

7. Procédé selon la revendication 5 caractérisé en ce que le composé solide du métal du sous-groupe IV qui est pour au moins 50 % en poids à l'état de valence 3, et le composé organomagnésien, sont utilisés dans des proportions telles qu'il y ait 0,25 à 5 atomes-gramme du métal du sous-groupe IV par atome-gramme de magnésium.

8. Procédé selon l'une quelconque des revendications 1 à 7, caractérisé en ce que l'on opère la polymérisation en présence d'un ou de plusieurs co-catalyseurs.

9. Procédé selon la revendication 8 caractérisé en ce que l'on utilise comme co-catalyseur un ou plusieurs trialkylaluminiums.